# EUROPÄISCHE PATENTANMELDUNG

(11) **EP 1 426 163 A2**
(43) Veröffentlichungstag der Anmeldung: **09.06.2004**
(21) Anmeldenummer: 03027609.1
(22) Anmeldetag: 02.12.2003
(51) Int. Cl.: B29C 47/06, B29C 47/20

(54) **Werkzeug zur Extrusion eines rohrförmigen Schmelzestranges**

(30) Priorität: 04.12.2002 DE 20218760 U; 13.05.2003 DE 20307412 U
(71) Anmelder: Reifenhäuser GmbH & Co. Maschinenfabrik, 53844 Troisdorf (DE)
(72) Erfinder: Stommel, Peter, 53773 Hennef (DE)
(74) Vertreter: Müller-Gerbes, Margot, Dipl.-Ing.

(57) **Zusammenfassung**

Die Erfindung betrifft ein Werkzeug zur Extrusion eines rohrförmigen Schmelzestranges aus thermoplastischem Kunststoff mit einer ringförmigen Austrittsdüse (5) und mindestens einem von einer zugehörigen Eintrittsöffnung (7.1,7.2,7.3) zur Austrittsdüse (5) führenden und konzentrisch zur Mittelachse des Werkzeuges verlaufenden Schmelzekanal (6.1,6.2,6.3), in dessen Begrenzungswandung schraubenlinienförmig umlaufende Wendel unter Ausbildung eines sich in Austrittsrichtung des Schmelzestranges erstreckenden Wendelverteilers eingebracht sind, wobei die Wendel sowohl in die innenseitige Begrenzungswandung als auch in die außenseitige Begrenzungswandung des mindestens einen Schmelzekanals eingebracht sind.

## Beschreibung

Die Erfindung betrifft ein Werkzeug zur Extrusion eines rohrförmigen Schmelzestranges aus thermoplastischem Kunststoff mit einer ringförmigen Austrittsdüse und mindestens einem von einer zugehörigen Eintrittsöffnung zur Austrittsdüse führenden und konzentrisch zur Mittelachse des Werkzeuges verlaufenden Schmelzekanal, in dessen Begrenzungswandung schraubenlinienförmig umlaufende Wendel unter Ausbildung eines sich in Austrittsrichtung des Schmelzestranges erstreckenden Wendelverteilers eingebracht sind.

Ein derartiges Werkzeug ist beispielsweise aus der DE 44 07 060 A1 und auch der DE 39 25 042 A1 bekannt geworden.

Eines der größten Probleme bei der Konstruktion von Werkzeugen zur Extrusion eines rohrförmigen Schmelzestranges aus thermoplastischem Kunststoff, beispielsweise zur Herstellung von Blasfolien ist es, ausgehend von der Eintrittsöffnung der Schmelze eine gleichförmige Verteilung derselben innerhalb des Werkzeuges zu bewerkstelligen, so daß nachfolgend ein über seinen Umfang vergleichmäßigter Schmelzestrang aus der ringförmigen Austrittsdüse austritt. Kommt es hierbei zu Masseflußschwankungen, resultiert dies in Dickenschwankungen der erhaltenen Folie, was unter allen Umständen zu vermeiden ist. Zu diesem Zweck werden in den Schmelzekanälen sogenannte Wendelverteiler mit schraubenlinienförmig umlaufenden Wendeln eingesetzt, in welchen eine gleichmäßige Verteilung der aus der Eintrittsöffnung eintretenden Schmelze in Richtung auf die Austrittsdüse im Werkzeug erreicht werden soll.

Bei den bekannten Werkzeugen sind diese Wendel in Form von schraubenlinienförmig umlaufenden Nuten üblicherweise im Bereich der in bezug auf die Mittelachse des Werkzeuges inneren Begrenzungswandung des Schmelzekanals ausgebildet. Da sich der solchermaßen aus den einzelnen Wendeln zusammensetzende Wendelverteiler hierbei im wesentlichen in Extrusionsrichtung und damit in Austrittsrichtung des Schmelzestranges erstreckt, welche üblicherweise vertikal von unten nach oben gerichtet ist, spricht man in diesem Zusammenhang auch von einem vertikalen Schmelzeverteiler.

Darüber hinaus sind auch verschiedentlich bereits Verteileinrichtungen für die Kunststoffschmelze zwischen Eintrittsöffnung und Austrittsdüse eines Werkzeuges vorgeschlagen worden, die sich quer zur Extrusions- und Austrittsrichtung der Schmelze und von daher üblicherweise horizontal erstrecken, was gemeinhin als Horizontalverteilung bezeichnet wird, wozu nur beispielhaft auf die US-A 3,809,515 verwiesen wird. Derartige Horizontalverteilungen sind jedoch in der Herstellung aufwendiger und benötigen auch größeren Bauraum im Vergleich zu den bekannten vertikalen Schmelzeverteilern.

Aufgabe der vorliegenden Erfindung ist es, ein Werkzeug der gattungsgemäßen Art mit vertikaler Schmelzeverteilung hinsichtlich der erzielbaren Folienqualität zu verbessern, wobei insbesondere auch dem bislang unvermeidlichen häufigen Auftreten von Folienverunreinigungen durch Stippen etc. vorgebeugt werden soll.

Zur Lösung der gestellten Aufgabe schlägt die Erfindung die Weiterbildung eines Werkzeuges gemäß den Merkmalen des Schutzanspruches 1 vor, bei welchem erfindungsgemäß die Wendel sowohl in die innenseitige Begrenzungswandung als auch in die außenseitige Begrenzungswandung des mindestens einen Schmelzekanals eingebracht sind.

Vorteilhafte Ausgestaltungen und Weiterbildungen des erfindungsgemäßen Werkzeuges sind Gegenstand der Unteransprüche.

Je nach Art der zu verarbeitenden Schmelze und der Produktionsparameter können die Wendel im Querschnitt betrachtet halbkreisförmig oder auch angenähert halbkreisförmig ausgebildet sein.

Darüber hinaus können die in die innenseitige Begrenzungswandung und die in die außenseitige Begrenzungswandung eines Schmelzekanals eingebrachten Wendel sich entweder deckungsgleich gegenüberliegen oder aber in Austrittsrichtung versetzt zueinander angeordnet sein, dies richtet sich nach den jeweiligen rheologischen Eigenschaften des zu verarbeitenden thermoplastischen Kunststoffes.

Ferner ist vorgesehen, daß die Tiefe der Wendel ausgehend von der Eintrittsöffnung in Richtung auf die Austrittsdüse abnimmt.

Das erfindungsgemäße Werkzeug kann als Einschichtwerkzeug zur Herstellung eines einschichtigen rohrförmigen Schmelzestranges z. B. für die Blasfolienextrusion ausgebildet sein, wobei es in diesem Falle lediglich über einen einzigen Schmelzekanal mit zugehörigem Wendelverteiler verfügt.

Insbesondere ist aber nach der Erfindung auch vorgesehen, das Werkzeug als Mehrschichtwerkzeug auszubilden, wobei es mehrere zur Austrittsdüse führende und konzentrisch zueinander angeordnete Schmelzekanäle mit den jeweils zugehörigen Wendelverteilern aufweist, in welchen die Wendel sowohl in die innenseitige Begrenzungswandung als auch in die außenseitige Begrenzungswandung der jeweiligen Schmelzekanäle eingebracht sind. Darüber hinaus ist beim erfindungsgemäßen Mehrschichtwerkzeug vorgesehen, daß alle Schmelzekanäle an einer Stelle im Werkzeug zusammengeführt sind und nachfolgend mit der Austrittsdüse kommunizieren.

Weitere Einzelheiten und Ausgestaltungen der Erfindung sind aus den nachfolgend erläuterten Zeichnungen ersichtlich. Es zeigen:
- Figur 1: einen vertikalen Schnitt durch ein erfindungsgemäß ausgebildetes Werkzeug,
- Figur 2: in vergrößerter Darstellung einen Ausschnitt des Werkzeuges gemäß Darstellung in der Figur 1,
- Figuren 3 bis 5: in vergrößerter Detailansicht X gemäß Figur 2 verschiedene Ausführungsformen eines im erfindungsgemäßen Werkzeug eingesetzten Wendelverteilers.

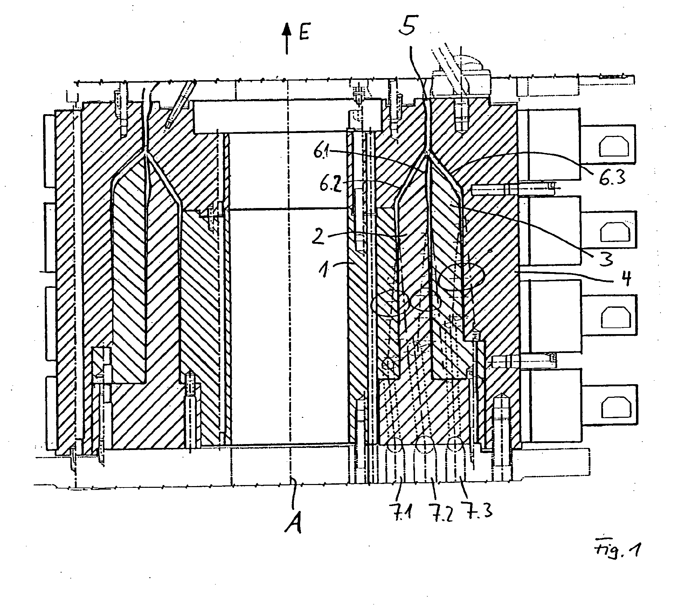

In der Figur 1 ist ein Werkzeug zur Extrusion eines rohrförmigen Schmelzestranges aus thermoplastischem Kunststoff beispielsweise zur Herstellung von Blasfolien im Längsschnitt entlang seiner Mittelachse A dargestellt. Das Werkzeug ist als Mehrschichtwerkzeug, hier Dreischichtwerkzeug ausgebildet und umfaßt in an sich bekannter Weise einen Innendorn 1, welcher außenseitig von einem inneren Verteilereinsatz 2 unter Belassung eines ersten Schmelzekanals 6.1 umgeben ist. Außenseitig an den inneren Verteilereinsatz anschließend ist ein äußerer Verteilereinsatz 3 vorgesehen, wobei zwischen dem inneren Verteilereinsatz 2 und dem äußeren Verteilereinsatz 3 ein zweiter Schmelzekanal 6.2 ausgebildet ist. Schließlich wird der außenseitige Abschluß des Werkzeuges von einem Außenmantel 4 bewirkt, wobei zwischen den äußeren Verteilereinsatz 3 und dem Außenmantel 4 ein dritter Schmelzekanal 6.3 verbleibt.

Die Schmelzekanäle 6.1, 6.2, 6.3 werden von der Unterseite des Werkzeuges her über jeweils eine Eintrittsöffnung 7.1, 7.2, 7.3 mit einer Schmelze aus thermoplastischem Kunststoff von einer nicht dargestellten Extrusionseinrichtung gespeist und die Schmelzekanäle 6.1, 6.2, 6.3 führen die ihnen über die Eintrittsöffnungen 7.1, 7.2, 7.3 zugeführte Schmelze in vertikaler Richtung nach oben zu einer oberseitig am Werkzeug ausgebildeten ringförmigen Austrittsöffnung 5, aus welcher letztlich die gesamte Schmelze als rohrförmiger Schmelzestrang in einer Extrusions- bzw. Austrittsrichtung E in an sich bekannter Weise austritt.

Die Schmelzekanäle 6.1, 6.2, 6.3 sind ebenso wie die diese begrenzenden Teile des Werkzeuges, nämlich Innendorn 1, innerer Verteilereinsatz 2, äußerer Verteilereinsatz 3 und Außenmantel 4 konzentrisch zu der in vertikaler Richtung verlaufenden Mittelachse A des Werkzeuges angeordnet.

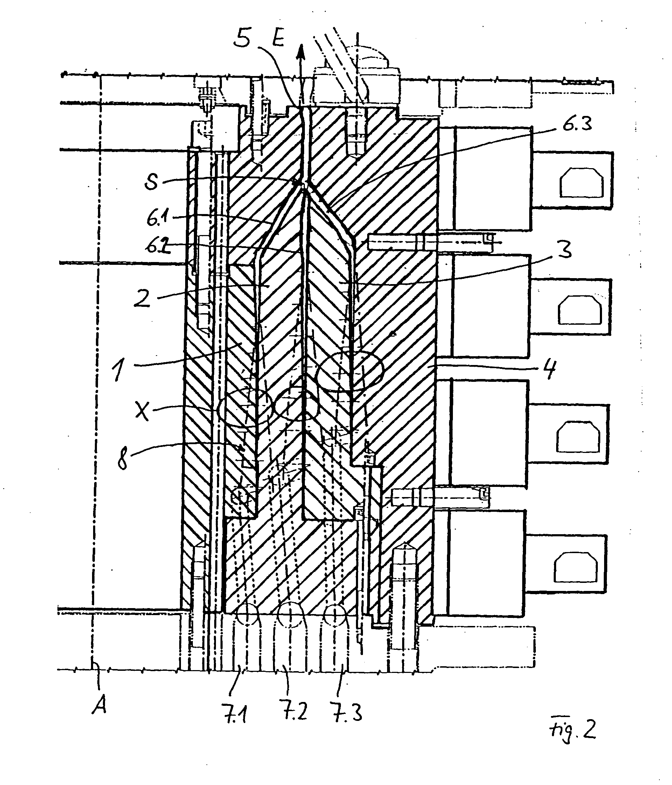

Wie sich insbesondere auch aus der vergrößerten Darstellung gemäß Figur 2 ergibt, werden alle Schmelzekanäle 6.1, 6.2, 6.3, die jeweils eine Schicht des nachfolgend aus der rohrförmigen Austrittsdüse 5 austretenden mehrschichtigen Schmelzestranges führen, gemeinsam an einer Stelle S innerhalb des Werkzeuges zusammengeführt und zu einem mehrschichtigen Schmelzestrang vereinigt, der sodann aus der ringförmigen Austrittsdüse 5 in Austrittsrichtung E austritt. Die Zusammenführung aller Schmelzekanäle 6.1, 6.2, 6.3 an einer Stelle S im Werkzeug ermöglicht eine hohe Dickenkonstanz der erzielten mehrschichtigen Folie. Im Falle beengter Platzverhältnisse kann auch eine möglichst eng aufeinanderfolgende Zusammenführung der einzelnen Schmelzekanäle 6.1, 6.2, 6.3 in Austrittsrichtung E aufeinanderfolgend vorgenommen werden, um dem Ideal einer Zusammenführung der Schmelzekanäle 6.1, 6.2, 6.3 an einer Stelle S, wie in Figur 2 dargestellt, möglichst nahezukommen.

Darüber hinaus ist in der Darstellung gemäß Figur 2 ersichtlich, daß die zunächst über die Eintrittsöffnungen 7.1, 7.2, 7.3 eintretenden Schmelzeströme in jeweils einen sich in Austrittsrichtung des Schmelzestranges erstreckenden Wendelverteiler 8 einmünden, in welchem die Schmelze ausgehend von der Eintrittsöffnung möglichst gleichmäßig auf dem gesamten Umfang des jeweiligen Schmelzekanals 6.1, 6.2, 6.3 verteilt wird, um eine gleichmäßige Schichtdicke über dem gesamten Austrittsspalt der Austrittsdüse 5 zu erhalten.

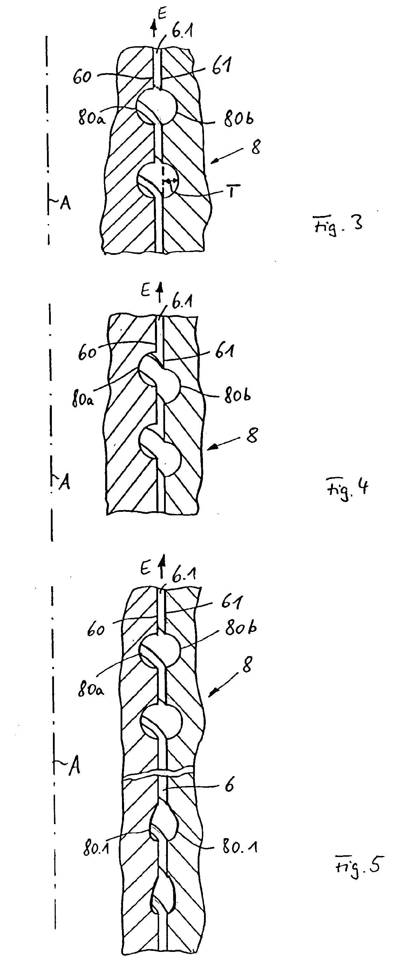

In der Figur 3, die in vergrößerter Darstellung die Einzelheit X eines solchen Wendelverteilers 8 gemäß Figur 2 darstellt, ist beispielhaft der Schmelzekanal 6.1 ersichtlich, in welchem die von der Eintrittsöffnung 7.1 eintretende Schmelze in Richtung der ringförmigen Austrittsdüse 5 gefördert wird. Der Schmelzekanal 6.1 wird hierbei in bezug auf die Mittelachse A innenseitig von einer innenseitigen Begrenzungswandung 60 und außenseitig von einer außenseitigen Begrenzungswandung 61 begrenzt. Die nachfolgend anhand des Schmelzekanals 6.1 vorgenommenen Erläuterungen gelten analog auch für die übrigen Schmelzekanäle 6.2 und 6.3.

Der Wendelverteiler 8 wird von schraubenlinienförmig um die Mittelachse A des Werkzeuges umlaufenden und in die Begrenzungswandungen des Schmelzekanals 6.1 eingebrachten nutförmigen Wendeln 80a, 80b ausgebildet, die eine Verteilung der Schmelze um den Umfang des Schmelzekanals bewirken.

Wesentliches Merkmal des Wendelverteilers 8 ist es, daß die den Wendelverteiler 8 ausbildenden schraubenlinienförmig umlaufenden Wendel 80a, 80b sowohl in die innenseitige Begrenzungswandung 60 als auch in die außenseitige Begrenzungswandung 61 des Schmelzekanals 6 eingebracht sind, wodurch sich die Verteilung der Schmelze im Schmelzekanal 6 signifikant verbessern läßt und darüber hinaus der Ablagerung von Stippen und dergleichen, die nachfolgend zu Verunreinigungen des austretenden rohrförmigen Schmelzestranges führen, entgegengewirkt wird. Die innenseitig und außenseitig eingebrachten Wendel können hierbei mit gleichem oder gegensinnigem Drehsinn um die Mittelachse A umlaufen.

Gemäß Ausführungsbeispiel in der Figur 3 sind hierbei die in der innenseitigen Begrenzungswandung 60 ausgebildeten Wendel 80a und die in der außenseitigen Begrenzungswandung 61 ausgebildeten Wendel 80b deckungsgleich einander gegenüberliegend angeordnet.

In einem alternativen und in der Figur 4 dargestellten Ausführungsbeispiel können die in der innenseitigen Begrenzungswandung 60 ausgebildeten Wendel 80a jedoch auch gegenüber den in der außenseitigen Wandung 61 eingebrachten Wendel 80b in Austrittsrichtung E versetzt zueinander angeordnet werden.

Bevorzugt weisen darüber hinaus die Wendel 80a, 80b im Querschnitt betrachtet, d. h. beispielsweise innerhalb der Zeichenebene, eine halbkreisförmige Gestalt auf, wobei des weiteren deren Tiefe T, die gleichzeitig den Radius der Wendel 80a, 80b bildet, ausgehend von der Eintrittsöffnung 7.1, 7.2, 7.3 in Richtung auf die ringförmige Austrittsdüse 5 abnehmend ausgebildet sein kann.

Schließlich zeigt das in der Figur 5 alternativ dargestellte Ausführungsbeispiel, daß neben den mit Bezugsziffer 80 gekennzeichneten Wendeln mit halbkreisförmigem Querschnitt auch solche Querschnittsformen für Wendel vorgesehen sein können, deren Umrißverlauf einem Ellipsenbogen angenähert ist, was mit Bezugszeichen 80.1 dargestellt ist. Auch andere geeignete Querschnittsformen der Wendel können ausgewählt werden.

Abweichend vom dargestellten Ausführungsbeispiel kann das Werkzeug auch mehr oder weniger Schmelzekanäle als die hier dargestellten drei Schmelzekanäle 6.1, 6.2, 6.3 aufweisen, es kann beispielsweise als Einschichtwerkzeug mit nur einem Schmelzekanal oder auch als Mehrschichtwerkzeug mit zwei oder mehr Schmelzekanälen ausgebildet sein.

Im Falle der Ausbildung als Mehrschichtwerkzeug mit mehr als einem Schmelzekanal 6 ist die Zusammenführung der Schmelzekanäle 6 an einer gemeinsamen Stelle S innerhalb des Werkzeuges bevorzugt.

## Patentansprüche

1. Werkzeug zur Extrusion eines rohrförmigen Schmelzestranges aus thermoplastischem Kunststoff mit einer ringförmigen Austrittsdüse (5) und mindestens einem von einer zugehörigen Eintrittsöffnung (7.1, 7.2, 7.3) zur Austrittsdüse (5) führenden und konzentrisch zur Mittelachse (A) des Werkzeuges verlaufenden Schmelzekanal (6.1, 6.2, 6.3), in dessen Begrenzungswandung schraubenlinienförmig umlaufende Wendel unter Ausbildung eines sich in Austrittsrichtung (E) des Schmelzestranges erstreckenden Wendelverteilers (8) eingebracht sind, **dadurch gekennzeichnet, daß** die Wendel sowohl in die innenseitige Begrenzungswandung (60) als auch in die außenseitige Begrenzungswandung (61) des mindestens einen Schmelzekanals (6.1, 6.2, 6.3) eingebracht sind.

2. Werkzeug nach Anspruch 1, **dadurch gekennzeichnet, daß** die Wendel im Querschnitt betrachtet halbkreisförmig ausgebildet sind.

3. Werkzeug nach Anspruch 1 oder 2, **dadurch gekennzeichnet, daß** die in die innenseitige Begrenzungswandung (60) und die in die außenseitige Begrenzungswandung (61) eines Schmelzekanals (6.1, 6.2, 6.3) eingebrachten Wendel sich deckungsgleich gegenüberliegen.

4. Werkzeug nach Anspruch 1 oder 2, **dadurch gekennzeichnet, daß** die in die innenseitige Begrenzungswandung (60) und die in die außenseitige Begrenzungswandung (61) eines Schmelzekanals (6.1, 6.2, 6.3) eingebrachten Wendel in Austrittsrichtung (E) versetzt zueinander angeordnet sind.

5. Werkzeug nach einem der Ansprüche 1 bis 4, **dadurch gekennzeichnet, daß** die Tiefe (T) der Wendel ausgehend von der Eintrittsöffnung (7) in Richtung auf die Austrittsdüse (5) abnimmt.

6. Werkzeug nach einem der Ansprüche 1 bis 5, **gekennzeichnet durch** Ausbildung als Mehrschichtwerkzeug mit mehreren zur Austrittsdüse (5) führenden und konzentrisch zueinander angeordneten Schmelzekanälen (6.1, 6.2, 6.3) und zugehörigen Wendelverteilern (8), wobei alle Schmelzekanäle (6.1, 6.2, 6.3) an einer Stelle (S) im Werkzeug zusammengeführt sind und mit der Austrittsdüse (5) kommunizieren.
